# EUROPÄISCHE PATENTSCHRIFT

(11) **EP 2 199 014 B1**
(45) Veröffentlichungstag und Bekanntmachung des Hinweises auf die Patenterteilung: **15.02.2012**
(21) Anmeldenummer: 08105986.7
(22) Anmeldetag: 16.12.2008
(51) Int. Cl.: B23B 31/16, B23B 31/00, B23Q 11/00

(54) **Vorrichtung zur Vermeidung von Schäden infolge von elektrischen Strömen an einem Werkzeug einer Werkzeugmaschine**
Device for avoiding damages as a result of electrical interference in a tool of a machine tool
Dispositif destiné à empêcher des dommages à la suite de flux électriques sur un outil d'une machine-outil

(43) Veröffentlichungstag der Anmeldung: 23.06.2010
(73) Patentinhaber: Mikron Agie Charmilles AG, 2560 Nidau (CH)
(72) Erfinder: Besuchet, Jean-Philippe, 2000 Neuchatel (CH); Stilwell, Gerald Richard, Douglas, MA 01516 (US); Guillette, Arthur E., Jr., Seymour, Conn. 06483 (US)
(74) Vertreter: De Colle, Piergiacomo

(56) Entgegenhaltungen:
- FR-A- 1 462 650
- US-B1- 6 227 549

## Beschreibung

Die Erfindung betrifft eine Werkstückspannvorrichtung zur Vermeidung von Schäden infolge von elektrischen Strömen an einem Werkzeug einer Werkzeugmaschine.

In einer Werkzeugmaschine können unerwünschte elektrische Ströme auftreten, die elektro-erodierende Einflüsse auf die Werkzeuge haben, so dass diese frühzeitig ausgetauscht, gereinigt und neu vermessen werden müssen, welches zu höheren Standzeiten der Maschinen führt.

Diese Stromschädigungen treten beispielsweise auch an den Lagern elektrischer Maschinen auf.

Beispielweise ist ein Verfahren und eine Anordnung zur Verhinderung von Lagerströmen bei elektrischen Maschinen in der Druckschrift DD PS 140 185 angegeben. Dort wird eine Isolierung auf den Lagersitz angebracht.

Die Offenlegungsschrift DE 27 17 593 A1 offenbart eine Anordnung zum Unterdrücken von HF-Strömen in Lagern von Wellen. Die Aufgabe wird mittels einer elektronischen Schaltung gelöst.

Weiterhin zeigt die Patentschrift DE 2839246 C2 ebenfalls eine Anordnung zum Unterdrücken von HF-Strömen in Lagern und Wellen, auch gelöst durch eine spezielle Elektronik.

US-6,227,549 offenbart eine Werkzeugspannvorrichtung zum Unterbrechen des Stromflusses zwischen einem elektrischenkabel und dem Bediener.

Die Aufgabe der Erfindung besteht darin, die Erosionsschäden an den Werkzeugen von Werkzeugmaschinen infolge von elektrischen Strömen zu reduzieren oder zu beseitigen.

Diese Aufgabe wird erfindungsgemäss durch die Vorrichtung nach Anspruch 1 gelöst.

In vorteilhafter Weise können die Isolierkörper aus mindestens einem zylindrischen Körper aus isolierendem Material bestehen und unterhalb des in einer Spannvorrichtung eingespannten Werkstückes angeordnet sein.

Weiterhin ist es beispielsweise möglich, dass die Isolierkörper an den zum eingespannten Werkstück weisenden Spannbackenenden angeordnet sind, wobei der elektrische Stromfluss zwischen den Spannbacken und dem eingespannten Werkstück unterbrochen ist.

In den Spannbackenenden können isolierende Keramikstifte oder isolierende Saphirstifte angeordnet sein.

Anhand einer Zeichnung wird die Erfindung als mögliches Ausführungsbeispiel dargestellt. Es zeigen
Fig. 1 ein isoliertes Werkstück mit zwei Isolationskörpern
Fig.2 eine Isolationseinrichtung mit isolierten Spannbackenspitzen

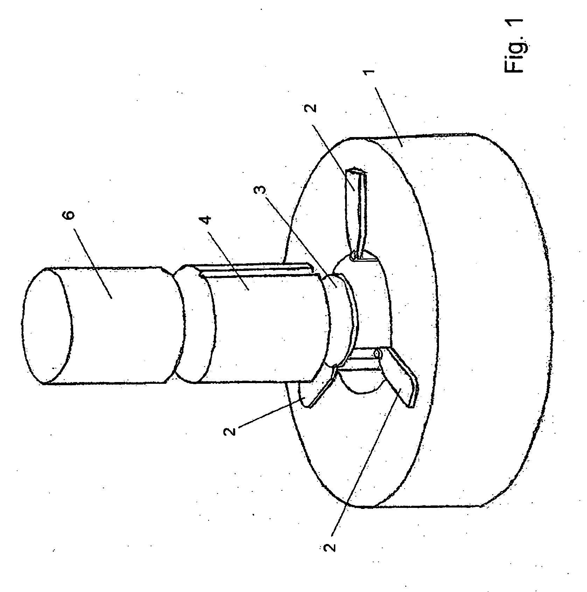

Die Figur 1 zeigt eine Spannvorrichtung 1 einer nicht dargestellten Werkzeugmaschine. Oberhalb der Spannvorrichtung 1 mit den Spannbacken 2 sind zwei Isolierkörper 3, und 4 schematisch dargestellt, wobei sich darüber ein zylindrisches Werkstück 6 befindet. Das zur Bearbeitung dienende Werkzeug, beispielsweise ein Bohrer oder Fräser, welches sich oberhalb des Werkstückes 6 befindet, ist nicht gezeigt. Je nach Anforderungen können ein oder mehrere Isolierkörper 3, 4 unterschiedlicher Dicke zwischen dem eingespannten Werkstück 6 oder dem Werkzeug vorgesehen sein. Der Werkstoff, beispielsweise Kunststoff, Keramik etc., und die Geometrie (Dicke, Höhe, etc.) muss so gewählt sein, dass kein Strom infolge der Durchbruchsspannung auftreten kann. Der erste Isolierkörper 3 kann entfallen, wenn das Werkstück berührungslos vom Boden der Spannvorrichtung 1 eingespannt wird. Der zweite Isolierkörper 4 dient zur elektrischen Trennung von Spannbacken 2 und Werkstück 6.

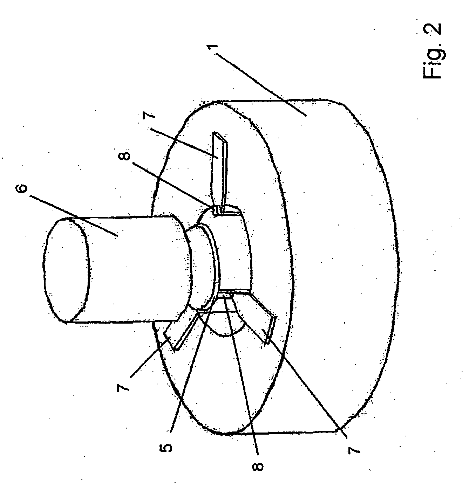

Ein anderes Ausführungsbeispiel ist in Figur 2 dargestellt. Zwischen dem Werkstück 6 und der Spannvorrichtung 1 ist ein scheibenförmiger Isolationskörper 5 vorgesehen.

Weiterhin sind an den zum Werkstück 6 gerichteten Spannbackenenden 7 Isolationsstifte 8, beispielsweise aus Saphir angeordnet, die ebenfalls eine geeignete elektrische Isolierung aufweisen.

Die mit der Erfindung erzielten Vorteile liegen insbesondere darin, dass die Standzeiten der Werkzeugmaschine deutlich verkürzt werden. Insbesondere können beispielsweise mindestens zwei Werkstücke mit einem einzigen Werkzeug bearbeitet werden, was derzeit der Stand der Technik nicht ermöglicht.

### Bezugszeichen

- 1: Spannvorrichtung
- 2: Spannbacken
- 3: Isolierkörper
- 4: Isolierkörper
- 5: Isolierkörper
- 6: Werkstück
- 7: Enden der Spannbacken
- 8: Saphirstifte

## Patentansprüche

1. Werkstück-Spannvorrichtung (1) für Werkzeugmaschinen zur Vermeidung von Schäden infolge von elektrischen Strömen an einem Werkzeug einer Werkzeugmaschine, **dadurch gekennzeichnet, dass** die Werkstück-Spannvorrichtung (1) Isolierkörper (3, 4, 5, 8) aufweist, die den schädigenden Stromfluss zwischen dem Werkzeug der Werkzeugmaschine und einem Werkstück (6) unterbrechen.

2. Werkstück-Spannvorrichtung (1) nach Anspruch 1, **dadurch gekennzeichnet, dass** die Isolierkörper (3, 4, 5) aus mindestens einem zylindrischen Körper aus isolierendem Material bestehen und unterhalb des in der Werkstück-Spannvorrichtung (1) eingespannten Werkstückes (6) angeordnet sind.

3. Werkstück-Spannvorrichtung (1) nach Anspruch 1 oder 2, **dadurch gekennzeichnet, dass** die Isolierkörper (8) an den zum eingespannten Werkstück weisenden Spannbackenenden (7) angeordnet sind, womit ein elektrischer Stromfluss zwischen den Spannbacken (2) und dem eingespannten Werkstück (6) unterbrochen wird.

4. Werkstück-Spannvorrichtung (1) nach Anspruch 1, 2 oder 3. **dadurch gekennzeichnet, dass** in den Spannbackenenden (7) isolierende Keramikstifte (8) angeordnet sind.

5. Werkstück-Spannvorrichtung (1) nach Anspruch 1, 2 oder 3, **dadurch gekennzeichnet, dass** in den Spannbackenenden (7) isolierende Saphirstifte (8) angeordnet sind

## Claims

1. Workpiece clamping apparatus (1) for machine tools for preventing damage due to electrical currents across a tool of a machine tool, **characterized in that** the workpiece clamping apparatus (1) has insulating bodies (3, 4, 5, 8) which interrupt the damaging current flow between the tool of the machine tool and a workpiece (6).

2. Workpiece clamping apparatus (1) according to Claim 1, **characterized in that** the insulating bodies (3, 4, 5) comprise at least one cylindrical body which is composed of insulating material and are arranged beneath the workpiece (6) which is clamped in in the workpiece clamping apparatus (1).

3. Workpiece clamping apparatus (1) according to Claim 1 or 2, **characterized in that** the insulating bodies (8) are arranged at those clamping jaw ends (7) which point toward the clamped-in workpiece, as a result of which an electrical current flow between the clamping jaws (2) and the clamped-in workpiece (6) is interrupted.

4. Workpiece clamping apparatus (1) according to Claim 1, 2 or 3, **characterized in that** insulating ceramic pins (8) are arranged in the clamping jaw ends (7).

5. Workpiece clamping apparatus (1) according to Claim 1, 2 or 3, **characterized in that** insulating sapphire pins (8) are arranged in the clamping jaw ends (7).

## Revendications

1. Dispositif (1) de serrage de pièces pour machines-outils, en vue d'éviter que des courants électriques infligent des dommages à un outil d'une machine-outil, **caractérisé en ce que** le dispositif (1) de serrage de pièces présente des corps isolants (3, 4, 5, 8) qui interrompent l'écoulement dommageable du courant entre l'outil de la machine-outil et une pièce (6).

2. Dispositif (1) de serrage de pièces selon la revendication 1, **caractérisé en ce que** les corps isolants (3, 4, 5) sont constitués d'au moins un corps cylindrique en matériau isolant et sont disposés en dessous d'une pièce (6) serrée dans le dispositif (1) de serrage de pièces.

3. Dispositif (1) de serrage de pièces selon les revendications 1 ou 2, **caractérisé en ce que** les corps isolants (8) sont disposés sur les extrémités (7) des mâchoires de serrage tournées vers la pièce à serrer, grâce à quoi l'écoulement de courant électrique entre les mâchoires de serrage (2) et la pièce (6) qui est serrée est interrompu.

4. Dispositif (1) de serrage de pièces selon les revendications 1, 2 ou 3, **caractérisé en ce que** des tiges isolantes (8) en céramique sont disposées aux extrémités (7) des mâchoires de serrage.

5. Dispositif (1) de serrage de pièces selon les revendications 1, 2 ou 3, **caractérisé en ce que** des tiges isolantes (8) en saphir sont disposées aux extrémités (7) des mâchoires de serrage.
